# EUROPEAN PATENT APPLICATION

(11) **EP 0 815 743 A2**
(43) Date of publication of application: **07.01.1998**
(21) Application number: 97304326.8
(22) Date of filing: 19.06.1997
(51) Int. Cl.: A23L 1/22

(54) **Flavor delivery system**

(30) Priority: 27.06.1996 US 670542
(71) Applicant: KRAFT FOODS, INC., Northfield, Illinois 60093 (US)
(72) Inventor: Merchant, Zohar Mohamed, Wilmette, Illinois 60091 (US); Gaonkar, Anilkumar Ganapati, Vernon Hills, Illinois 60061 (US); Nicholson, Vikki Jeannine, Kalamazoo Michigan 49009 (US); Tufts, Helen Marion, Arlington Heights, Illinois 6005 (US)
(74) Representative: Eyles, Christopher Thomas

(57) **Abstract**

The present invention is directed to a method for producing a microcapsule flavor delivery system. In the method, a mixture of a flavoring material selected from the group consisting of an oil soluble flavor dissolved in an oil, a water soluble flavor or a combination of the two, and a protein solution is provided. The mixture is subjected to low shear mixing to provide an o/w pre-emulsion or a w/o/w multiple emulsion. The pre-emulsion or multiple emulsion is subjected to high shear mixing or sonication to provide either an o/w emulsion having a coating of protein around the oil droplets or a w/o/w multiple emulsion having a coating of protein around the w/o droplets, respectively. The microcapsule flavor delivery system is incorporated into a food product to improve the flavor perception.

## Description

### Field of the Invention

The present invention relates generally to a method for producing a protein microcapsule flavor delivery system. More particularly, the present invention is directed to a flavor delivery system using oil-in-water (o/w) emulsions wherein the dispersed phase is an oil phase surrounded by a protein, or water-in-oil-in-water (w/o/w) emulsions wherein the dispersed phase is an oil-in-water emulsion surrounded by protein.

### Background of the Invention

Emulsions, in general, are heterogeneous systems of one immiscible liquid dispersed in another immiscible liquid in the form of droplets which usually have a diameter greater than 1 micron. The two liquids are chemically unreactive and form systems characterized by a low thermodynamic stability. Simple emulsions are classified according to the nature of their continuous and dispersed phase. It is the custom to set forth the droplet (dispersed) phase first followed by the continuous phase separated by a / mark, i.e., either water (droplets)-in-oil (continuous) (w/o) or oil-in-water (o/w) emulsions. Multiple emulsions are characterized by listing the primary emulsion set first which is dispersed in a continuous phase. For example, in a water-in-oil-in-water (w/o/w) multiple emulsion, a w/o primary emulsion is dispersed in a water continuous phase. An emulsifier is present to stabilize the emulsion and a variety of ionic and non-ionic surfactants are available for this purpose. Lipophilic (oil soluble, low HLB) surfactants are used to stabilize w/o emulsions, whereas hydrophilic (water-soluble, high HLB) surfactants are used to stabilize oil/water systems.

Multiple emulsions are more complex systems as the drops of the dispersed phase themselves contain even smaller dispersed droplets which normally consist of a liquid which is miscible, and in most cases, is identical with the continuous phase. They are, therefore, emulsions of emulsions. For each type of multiple emulsion, the internal and external phases are alike and an intermediate phase separates the two like phases. The intermediate phase is immiscible with the two like phases.

Multiple emulsions are usually prepared by a two-stage procedure, Matsumoto, et al., *J. Colloid Interference Sci.,* 57-353-361 (1976). The first stage involves the preparation of a primary emulsion, which, in the preparation of an o/w/o emulsion, is an o/w emulsion. In the second step, the primary emulsion is further emulsified in oil containing a hydrophobic emulsifier to form the multiple emulsion. The primary emulsion may be prepared in any suitable manner; for example, with a laboratory mixer, by ultrasonication, etc. A hydrophilic emulsifier is used to promote the formation of an o/w emulsion. This emulsion is then poured into a solution or a dispersion of a lipophilic emulsifier in oil. The lipophilic emulsifier is used to promote w/o emulsification in which the "water" phase is the o/w emulsion.

The second emulsification step is critical and sometimes extremely difficult to effect as excess mixing can fracture the drops of the primary emulsion, resulting in a simple w/o emulsion. The internal water droplets are lost and mixed with the external oil phase as the water drops are torn apart. For this reason, high shear mixers and sonication generally have been considered unsuitable methods for preparation of the second emulsion. A low-shear mixer may be employed or the mixture may be shaken by hand. However, no matter what emulsification method is used for the second step, some of the internal oil phase is usually lost to the external oil phase.

With respect to food technology, considerable research effort has been expended on developing reduced fat food products which have low oil content, particularly aqueous based products which have low or substantially no fat content. Significant advances have been made in reducing fat and oil content of various food products through the use of, for example, water-in-oil emulsions or water-in-oil-in-water emulsions, wherein water occupies volume which otherwise would have been occupied with oil, thereby commensurately reducing the amount of oil in an oil-containing food product. For example, Takahashi, et al., U.S. Patent Nos. 4,632,840, 4,626,443 and 4,626,444 disclose reduced fat salad dressings having a w/o/w emulsion base. Such salad dressings nevertheless still have about 30% oil by weight. Further fat reductions have been obtained using, as fat mimetics, novel carbohydrate-protein complexes such as those disclosed in U.S. Patent No. 5,104,674 or microreticulated microcrystalline cellulose as disclosed in U.S. Patent No. 5,011,701. Such carbohydrate-protein complexes or microreticulated microcrystalline cellulose are particularly useful in providing no-fat food products such as viscous and pourable salad dressings and the like having fat-like organoleptic characteristics.

While elimination or substantial reduction of oil content is attainable, such low-fat or no-fat products characteristically lack (or lose during storage) the desirable flavor possessed by their high-fat counterparts. Stabilization of lipid-soluble flavors in low- or no-fat, aqueous based food products has not received much attention. Heretofore, aqueous soluble flavors have merely been added along with other aqueous soluble ingredients to produce low- or no-fat food products; with respect to reintroducing fat-soluble flavors to reduced-fat products. PCT International Application No. WO90/00354 to Singer discloses adding to low-fat and no-fat foods, fat globules containing concentrated fat soluble flavoring to simulate the organoleptic effect of fat-rich food products. In each of these cases, the flavors are in contact with the aqueous based food vehicle environment (either directly or at the interface between the fat globules and the aqueous base of the food vehicle) and thereby may be adversely affected. Flavor perception in low- or no-fat food products containing soluble flavors simply mixed into the aqueous-based food vehicle, e.g., viscous or pourable salad dressings or the like, rapidly deteriorates; presumably due to interaction of flavors with the aqueous base, giving such products a short shelf life. It would therefore be desirable to provide food products (especially no-fat products) which have aqueous or oil soluble flavor components stably maintained so as to protect the flavors from volatilization, oxidation and other undesirable events, during extended storage, while at the same time providing for ready release of such flavors, with good organoleptic characteristics, when such low/no-fat food products are eaten.

It is known that stability of certain non-food compositions can be obtained through the use of micrcencapsulation. Thus, microencapsulation of nonaqueous liquids such as toluene previously has been accomplished using a proteinaceous substance such as bovine serum albumin (BSA), Suslick, et al., *Protein Microencapsulation of Nonaqueous Liquids,* 112 J. Am. Chem. Soc. 7807-09 (1990).

It would be desirable to obtain a stable and effective flavor delivery system for food grade products.

Accordingly, an objective of the invention is to provide a flavor delivery system using food grade ingredients, having the desirable characteristics mentioned herein, while avoiding the disadvantages of the prior art.

Another objective of the invention is to provide a flavor delivery system for low- or no-fat food products.

Still another objective is to provide a flavor delivery system which will be stable over an acceptable period of time, as well as being able to resist an acceptable level of processing shear.

A further objective of the invention is to provide a flavor delivery system using protein microcapsules of oil droplets or w/o droplets.

Another objective of the invention is to provide a rnicrocapsule-based flavor system having good organoleptic characteristics and with a particle size small enough to avoid a gritty or sandy mouthfeel.

### Summary of the Invention

The present invention is directed to a method for producing a microcapsule flavor delivery system. In the method, a mixture of a flavoring material selected from the group consisting of an oil soluble flavor dissolved in an oil, a water soluble flavor in a w/o emulsion, and a combination of water soluble flavor and oil soluble flavor in a w/o emulsion and a protein solution is provided. The mixture is subjected to low shear mixing to provide an o/w pre-emulsion or a w/o/w multiple emulsion. The pre-emulsion or multiple emulsion is subjected to high shear mixing or sonication to provide either an o/w emulsion having a cross-linked coating of protein around the oil droplets or a w/o/w multiple emulsion having a coating of cross-linked protein around the w/o droplets, respectively.

### Detailed Description of the Invention

The process of the invention involves providing a flavor dissolved in an oil or a w/o emulsion and adding it to a protein solution to form an o/w pre-emulsion or a w/o/w multiple emulsion. The o/w pre-emulsion or w/o/w multiple emulsion is then subjected to either high shear mixing or high intensity sonication to generate a protein coat surrounding the oil droplet or the w/o droplet, the resulting droplet or microcapsule being surrounded by the continuous water phase.

The protein source can be egg white proteins, serum proteins, milk proteins, or other proteins, desirably containing thiol groups. The oil can be any oil compatible with the above system, which should be a food grade oil. Emulsifiers may be used if necessary and can be either ionic or nonionic.

The protein microcapsule flavor delivery system results in encapsulating the oil soluble flavor or water soluble flavor or a combination of the two. The encapsulated protein microcapsule is stable in aqueous products including fat-free products, although the protein microcapsule is not restricted to only fat-free products. It may also be used for "light" or low-fat products. There is no detrimental effect on mouthfeel, and the microcapsules release the flavor in the mouth upon mastication. This delivery system may also be used to incorporate fat-soluble vitamins or other oil or oil and water soluble components. It can also be used to protect oils which may be susceptible to oxidation.

According to the process of the invention, a protein solution is prepared by adding proteins slowly with mild stirring into deionized water for about 1 hour. The protein may be egg white or other albumin type proteins. The protein concentration is from about 0.2 to about 11.5%, and preferably is from about 1.25 to about 2.5%. All percentages used herein are by weight, unless otherwise indicated. The oil or fat is selected from the group consisting of butterfat, corn oil, soybean oil, neobee oil, cottonseed oil, peanut oil, fish oil or other oils. The oil is added to the protein solution and stirred until no more free oil is detected. The stirring to form the pre-emulsion may be accomplished at a setting of about 1,000 to 15,000 rpm, preferably about 11,000 to 12,500 rpm, on a Polytron stirrer (Brinkmann).

The protein microcapsules are prepared by taking the protein solution or oil-in-water emulsion and applying high intensity ultrasound using a probe type sonicator set on continuous mode at 70% power. The ultrasound is applied until a temperature of about 105° F. (40° C.) is reached for egg-white proteins (about 1 minute or less). The temperature range may be from about 10° C. to about 65° C. and preferably is within the range of from about 20° C. to about 50° C. The sonication for the preparation of the protein microcapsules takes place at a sonication power within a range of about 10-175 watts, and preferably, in the range of 75-150 watts. The period of time for the sonication may be from 5.0-120.0 seconds, and preferably is from 10-30 seconds. The sonication temperature is in the range of 4.0-65° C. and preferably will be in the range of 4-40° C. The oil concentration may be in the range of 20.0-70.0%, and preferably will be in the range of 30-37.5%. The flavor concentration may be 0.1-50%, depending on the flavor desired. An emulsifier may be used in the range of 0-2.5% concentration, and preferably in the range of 0.6-1.12% concentration. Emulsifiers may be selected from the group including Emphos™ (phosphorylated monoglyceride (Witco Corp.)), DGDO (decaglycerol decaoleate), monoglycerides, substituted monoglycerides, polyglycerol esters, sorbitan esters, lecithins, and sucrose fatty acid esters. The preferred emulsifiers include Emphos™ (phosphorylated monoglyceride), DGDO (decaglycerol decaoleate) and sucrose fatty acid esters. Hydrocolloids may improve the process, and preferably are selected from the group including gelatin, starch, alginate, and gellan gum. The hydrocolloid concentration may be in the range of 0-15% and preferably 2.1-14.5% of the final emulsion.

By "microcapsule" is meant a protein capsule surrounding an oil/organic phase. The term microcapsule could also be described as a microsphere, because the capsule may have a spherical shape, but microcapsule is the preferred term because of the possibility that the capsule shape may be other than spherical. The process for making microcapsules involves emulsification and is believed to involve a chemical cross-linking of protein molecules. Microcapsules are formed by application of high shear or high intensity ultrasound to an oil and protein pre-emulsion. The cross-linking reaction is believed to involve the formation of disulfide bonds by sonochemically (acoustic cavitation) generated superoxide. Microcapsule yield may be increased when the mixture is sparged with 0₂. The typical size for microcapsules is in the range of 1-25 microns and the average particle size is about 16 microns.

The protein microcapsules with entrapped oil can be separated by centrifugation followed by a wash with deionized water. The microcapsules are present in the top layer. The protein microcapsules can be seen through a microscope. Stability of the microcapsules can be tested with 0.1 - 1% lecithin.

Stability further can be tested at different pH levels, e.g., 2.5, 3.0, 4.0 and at differing ionic strength levels, e.g., 0.2M, 0.5M and 1.0M sodium chloride. A small amount of the protein microcapsule material containing oil soluble dye is treated with a small amount of the appropriate pH ionic strength water along with about the same amount of oil. The absorbance of the oil layer is read over a period of time to determine the stability of the microcapsules. The wave length profile with Red 0 dye in oil is used to establish the absorbance maxima. The stability of the protein microcapsules is shown by stability against 0.1% lecithin, or similar type emulsifier, unlike an emulsion which breaks up in contact with a lecithin solution.

It has been determined that the protein microcapsule flavor delivery system can be kept stable in the pH range 2.5 to 4.0 and ionic strength of 0.2M to 1.0M at room temperature. The system is stable against processing shear. The protein microcapsules may be used in low-fat foods containing about 0%- 10% fat, and more preferably they are used in low-fat foods containing less than 6% fat. The protein microcapsules containing oxidized oil flavor in fat-free mayonnaise showed negligible difference in flavor intensity. Protein microcapsules containing pickled egg spice flavor in fat-free salad dressing showed diminishment in tartness but no significant difference in the egg flavor profile. The flavor delivery system containing vanilla flavor in ice cream showed higher overall intensity and preference to a control sample. A flavor delivery system containing cheese flavor in fat-free singles base showed similar flavor profile in comparison to a control. A cheese flavor in accordance with the invention using a fat-free cheese base showed higher flavor intensity compared to the control.

The precise mechanism of release of flavor is not known, but it is believed that excessive sonication may have a detrimental effect on flavor components, thus, the amount of sonication should be no more than necessary to create acceptable protein microcapsules.

Similarly, with regard to protein microcapsules containing droplets of water-in-oil emulsion, it has been found that the typical size range of such capsules is from 1-100 microns. Flavor delivery systems of this type are capable of encapsulating both oil soluble and water soluble flavors. The protein microcapsule process of the invention provides a way to stabilize water-in-oil-in-water multiple emulsions. Microscopy data revealed the presence of a w/o emulsion coated by a cross-linked protein layer. The w/o protein microcapsule was found to be stable in the presence of lecithin or Tween 20, unlike an untreated w/o emulsion which becomes destabilized in the presence of lecithin or Tween 20. Analysis of the protein microcapsules with gel electrophoresis shows an increased molecular weight which indicates cross-linking of the proteins. Incorporation of a dye (chlorophyll) in an oil phase and use of sonication with different aqueous solutions of varying pH and salt concentrations showed no leakage of dye from the microcapsule into an oil layer on top of the sample. Again, this tends to indicate stability of the microcapsule and the presence of cross-linking among the proteins. Further cross-linking was found to be possible at a second position through lysine amine linkage with glutaraldehyde. A 25% glutaraldehyde solution is added to the microcapsule slurry at a level of from about 1% to about 5%. Under some conditions, the glutaraldehyde reduced dye diffusion.

The invention has been found to be effective using proteins including egg white, pure ovalbumin (from egg white) or lactalbumin. Egg white is the preferred protein. Ovalbumin also works well, but is not as desirable as egg white because it is more expensive. Lactalbumin worked not quite as well. Use of the flavor delivery system of the invention using egg white as the protein shows that oil soluble flavor may be incorporated into an aqueous phase with much greater stability. The flavor was found to be released effectively in the mouth, although the exact mechanism is unknown. The flavor attributes, for example, of ice cream of various flavors, was found to be closer to that of full fat ice cream than that of other flavor delivery systems. Different protein microcapsules in accordance with the invention have different release characteristics, but in the case of vanilla flavor in ice cream, the microcapsule has flavor approaching that of full fat.

Use of a microcapsule containing droplets of w/o may be made for flavor delivery systems using vanilla. Vanilla typically is available in an alcohol base (about 35% alcohol) and is water soluble. A w/o emulsion using vanilla is produced in accordance with the invention in the form of a stable w/o emulsion. This emulsion can then be processed in accordance with the invention, but one must be careful in the sonication stage or heat generated can ruin the flavor. The invention permits one to prepare any w/o emulsion in a protein microcapsule. The advantage of this form of the invention is that it permits both water soluble and oil soluble flavors in the same microcapsule. To combine an oil soluble and a water soluble flavor, a w/o emulsion is formed. A protein solution is then added to the w/o emulsion-containing flavor and subjected to low shear mixing to form a w/o/w multiple emulsion, followed by high shear mixing or sonication to provide a w/o/w emulsion having a coating of cross-linked protein around the w/o droplets.

The process of the invention also has been applied to incorporating coffee flavor in microcapsules, as indicated in the example below. Protein microcapsules produced in accordance with the invention can be frozen and preferably should be stored at cool temperatures.

### Example 1

First, an o/w pre-emulsion was prepared by dispersing the oil/fat phase in the aqueous phase containing an appropriate protein (BSA, lactalbumin, egg white, and ovalbumin) using a Polytron PT 3000 homogenizer. Protein solutions (5% or 2.5%) were prepared by adding the protein to deionized water slowly then stirred for an hour's time period with mild stirring. The solution was left covered overnight at 4° C. A variety of oil/fat may be used: flavor oils, vegetable oils, butter fat, fish oil, oil-based flavor, etc. The ratio of the protein solution to the oil phase was varied (1:1, 1:2 and 2:1). Typically the rpm of the Polytron was about 5000 and the time of dispersion was 1 minute. Ten g. of the o/w emulsion thus prepared was then taken into a 20 ml vial and sonicated for a fixed time 115-60 sec) at a certain power (settings of 3, 5 and 8) using a Branson Sonication Cell Disrupter 200. The protein (containing cysteine residues) formed a cross-linked protein layer around the oil drops in the presence of cavitation forces to form the protein microcapsules. These microcapsules can further be hardened via cross-linking using glutaraldehyde. For cross-linking with glutaraldehyde, 200 g. of microcapsule slurry is adjusted to pH = 4.1 and cooled to 5° C. Add 5 ml 25% glutaraldehyde and let it sit overnight. Centrifuge followed by water wash several times to remove the unreacted glutaraldehyde. The microcapsules contain 2-4% protein, 25-38% fat, 57-73% moisture and 40-90% cross linking. Average particle size was about 16 µm.

To confirm that a protein coat is formed around the oil droplet the following tests were performed:
a) Crosslinking of Proteins by SDS PAGE: A direct proof for the presence of a crosslinked protein layer was obtained from the SDS PAGE analysis. It shows an increase in molecular weight of the proteins containing thiol moieties. The data showed 40% to 90% crosslinking.
b) Protein staining by fluorescent microscopy (Light Micrographs) : The sample of the protein microcapsules were stained with a dye (ANS) for proteins and visualized under fluorescent light microscope at X400 to X1400 magnification. The presence of protein in the microcapsule coating was confirmed.
c) Emulsion stability test: In an o/w emulsion made using proteins as an emulsifier with no cross-linking of the protein, the protein layer around the oil droplets can be replaced with a highly surface active surfactant. This leads to the coalescence of the droplets and destabilization of the emulsion. In the microcapsules, however, it is not possible to replace the crosslinked protein layer using the highly surface active surfactant. In other words, the surfactant does not destabilize microcapsules. Use was made of 0.1% dimyristoylphosphatidycholine or 1% Tween 20 for this test. The surfactant solution was mixed with a small amount of microcapsules. It was then stirred and observed under the microscope for any free oil. The absence of any free oil under these conditions suggested that the layer around the oil drops is not a simple protein layer as in the emulsions.
d) Leakage of Oil Soluble Dye: The stability of microcapsules under different pH and ionic strength over time was performed (pH = 2.5, 3.0, 4.0 and ionic strength = 0.2M, 0.5M and 1M Nacl). Thirty ml of water (of appropriate pH and ionic strength) and 30 ml of oil were added to a 100 ml bottle containing 3 g. of microcapsules in which the oil phase contained a dye (chlorophyll or oleoresin paprika). Absorbance of the oil phase was read as a function of time to determine the integrity of the microcapsules. If the capsules are leaky, the dye would leak out into the oil phase and lead to an increase in the absorbance of the oil phase. The capsules crosslinked with glutaraldehyde were shown to be leakproof, whereas microcapsules without glutaraldehyde cross-linking became leaky especially at very low pH after 12 weeks. However, they are stable under the conditions existing in most of the food products of interest.

### Example 2

It is possible to obtain cavitation using a microfluidizer. Hence, protein microcapsules may also be prepared by using a microfluidizer instead of a sonicatcr. In this case an o/w emulsion is prepared using a protein solution and an oil solution as described in Example 1. The emulsion thus formed was passed through a microfluidizer (Microfluidics Corporation, MA) at 20,000 psi (137.90 MPa). Although a high pressure (20,000 psi [137.90 MPa]) is suggested for producing cavitation, it would be possible to use a pressure of about 10,000 psi (68.95 MPa) or higher. Stability testing was performed as described in Example 1 and the microcapsules were found to be stable in the presence of the surfactant.

### Example 3

### Delivery of Flavors in Coffee by Protein Microcapsules

Aromatized coffee oil in Neobee oil (a medium chain triglyceride) or organic solvent (4.8 g.) was added to 4% egg white solution (4.8 g.) and encapsulated aromatized coffee oil protein microcapsules were prepared as described in Example 1. To 4 g. of the resulting protein microcapsules trehalose (0.4 g.) was added and samples were frozen and freeze dried. The presence of trehalose helps in yielding non-oiling dry coffee protein microcapsules. The formation of the encapsulated coffee protein microcapsules was confirmed as described in Example 1.

The encapsulated aromatized coffee oil protein microcapsules were compared with the unencapsulated aromatized coffee oil by adding to hot boiling water and sensorially monitoring the aroma released. The panel (n=6-7) concluded that encapsulated aromatized coffee oil protein microcapsule samples (both as is or freeze dried) were preferred over unencapsulated aromatized coffee oil.

### W/O/W Protein Microcapsules

Four variations of protein microcapsules were prepared: One with only water encapsulated (empty), a second with flavor alone, a third with flavor in a 3% starch solution, and a fourth with flavor in a starch gel.

W/O/W protein microcapsules were optimized in two stages. The first emulsion (w/o) was optimized for stability and maximum flavor concentration by evaluating type and concentration of emulsifier, type and concentration of fat, flavor concentration, and hydrocolloid concentration. The second stage was the w/o/w emulsion stability and processing conditions.

Protein concentration, sonication time, and sonication temperature were evaluated. The first emulsion was evaluated for emulsion stability under centrifugation (as an accelerated shelf-life). The final w/o/w protein microcapsule system was evaluated by colorimetry to determine the amount of flavor lost, microscopy, and stability to an external emulsifier known to destabilize o/w emulsions.

### Example 4

### Method of Preparation of Original Vanilla Flavor W/O/W Protein microcapsules

15.0 g. of butterfat at 50° C. with 1.0% Emphos F27-85 (phosphorylated monodiglyceride, Witco Corporation) is homogenized with 10 g. aqueous solution of 30% vanilla flavor (on a Brinkmann Polytron PT3000 with a PT-DA 3012/2S generator) at 10,000 to 15,000 rpm. The w/o emulsion is homogenized with a 2.5% egg white solution (1:1 w/w) at 5,000 to 6;000 rpm for seconds. The mixture is sonicated on a Branson Sonifier Cell Disrupter 200 at 100 Watts for ten seconds to form encapsulated vanilla flavor protein microcapsules, as confirmed by photomicrographs.

### Example 5

### Preparation of 3% Starch Vanilla W/O/ W Protein Microcapsules

17.5 g. butterfat at 50° C. with 3.0% Emphos F27-85 (phosphorylated monoglyceride, Witco Corp.) is homogenized with 7.5 gm. of an aqueous solution of 30% vanilla flavor and 3.0% Mira-Gel starch at 50° C. using a Brinkmann Polytron at 10,000 to 15,000 rpm. The w/o emulsion is added to 2.5% egg white solution (1:1, w/w/) and homogenized at 5,000 to 6,000 rpm on a Brinkmann Polytron for 15 seconds. The emulsion is then sonicated at 100 watts for 30 seconds to form stable vanilla flavor starch protein microcapsules.

### Example 6

### Preparation of Starch Gel Vanilla W/O/W Protein Microcapsules

17.5 g. butterfat at 50° C. with 3.0% Emphos F27-85 is homogenized at 10,000 to 15,000 rpm with 7.5 g. of a starch gel mixture (56.5% water, 29.0% vanilla flavor, 14.5% Mira-Gel starch) at 50° C. The emulsion is added to 2.5% egg white solution (1:1, w/w) and homogenized at 5,000 to 6,000 rpm for 15 seconds. The emulsion is then sonicated at 100 watts for 30 seconds to form starch gel vanilla w/o/w protein microcapsules.

### Example 7

### Preparation of Empty W/O/W Protein Microcapsules

17.5 g. butterfat at 50° C. with 3.0% Emphos F27-85 is homogenized at 10,000 to 15,000 rpm with 7.5 g. water at 50° C. The emulsion is added to 2.5% egg white solution (1:1 w/w) and homogenized at 5,000 to 6,000 rpm for 15 seconds. The emulsion is then sonicated at 100 watts for 20 seconds to form empty w/o/w protein microcapsules.

### Analysis of W/O/W Protein Microcapsules

Stability of the w/o emulsion was determined by centrifuging the emulsion at 2,500 rpm (2,500 xG) in a Labofuge Centrifuge by Scientific America. The amounts of oil, w/o, and water phases were measured. The stability of the w/o/w protein microcapsules was determined by centrifuging (ten minutes under same conditions) after preparation and measuring the amount of water and the amount of flavor lost. The flavor loss was determined by colorimetry with a Beckman DU-7 Spectrophotometer or a Perkin Elmer Lambda UV/VIS Spectrophotometer. The wash solution is centrifuged at 10,400 xG for 10 minutes at 18 to 20° C. on a Beckman Model J2-21M Induction Drive Centrifuge. The aqueous solution is weighed and filtered with a 0.45 µm Millipore filter. The filtered solution is then analyzed at 426 nm. To determine if the system was a w/o/w emulsion or a protein microcapsule, a 0.5% lecithin solution was added to observe oiling off and fluorescent microscopy was performed with the protein dye (acid fuscia).

### Results of Analysis of W/O/W Protein Microcapsules

Analysis of the first emulsion (i.e., w/o emulsion) indicated that acceptable stability is obtained at 0 to 3.0% emulsifier in the oil phase, 2.0 to 2.5% is preferred. Moreover, a fat level of 20 to 70% is acceptable and 60 to 67.5% is preferred. Hydrocolloids such as gelatin, starch, alginate, and gellan gum are acceptable at 0 to 15.0% of the internal aqueous phase (IAP), 2.1 to 14.5% is preferred, with starch being the preferred hydrocolloid. The flavor concentration of from 0.1 to 50% of the emulsion is acceptable, with preferred flavor concentration being flavor dependent. Sonication from 5.0 to 120.0 seconds is acceptable, 10 to 30 seconds is preferred. Sonicaticn temperatures from 4.0 to 65° C. is acceptable, 4 to 40° C. is preferred. A protein solution of 0.2 to 11.5% protein is acceptable, 1.25 to 2.5% solution is preferred.

After preparation of the w/o/w protein microcapsules, the microcapsules were centrifuged at 2,500 rpm (2,500 x g) for 10 minutes on a Labofuge Centrifuge by Scientific America to remove excess water. The microcapsules were washed twice with 4° C. water and centrifuged after each wash under the same conditions.

Colorimetry was used to determine the encapsulation efficiency of the microcapsules and confirmed by HPLC from vanillin and ethyl vanillin (See Tables 1 and 2).

### Example 8

### Application of Protein microcapsules in Vanilla Frozen Dessert

The w/o/w protein microcapsules containing vanilla flavor were added to 4° C. frozen dessert mix with stirring. The mix was then added to a benchtop Swiss Ott freezer to freeze the frozen dessert. The sample was hardened at -20° C. for six hours minimum then tempered at 4° C. for four hours minimum before sensory evaluation.

The stability of the protein microcapsules was monitored by microscopy in the product throughout the process by sampling at various stages. Sampling was taken of the mix before freezing, at the draw (as the frozen dessert is removed from the scraped surface heat exchanger), and after hardening. The empty protein microcapsules and the original w/o/w protein microcapsules burst or were misshapen during hardening at -20° C. but the protein microcapsules with 3% starch and the starch gel were robust and withstood the hardening state.

Compositional analysis was performed on the frozen dessert with w/o/w protein microcapsules. See Tables 1 and 2.

**TABLE 1.**

| W/O/W PROTEIN MICROCAPSULES | | | | | |
|---|---|---|---|---|---|
| | Per cent H₂O Lost | Per cent Vanilla Lost | Vanillin (µg/mg) | Ethyl Vanillin (µg/mg) | Particle Size (Ave. µm) |
| Original | 62.95 | 42.78 | 2.68 | 1.13 | 8.59 |
| Starch Gel | 12.90 | 10.56 | 2.05 | 0.72 | 8.78 |
| 3% Starch | 30.80 | 29.35 | 2.28 | 0.88 | 7.96 |

**TABLE 2**

| W/O/W PROTEIN MICROCAPSULES IN VANILLA FROZEN DESSERT | | |
|---|---|---|
| | Vanillin (µg/g) | Ethyl Vanillin (µg/g) |
| Original | 27.3 | 11.8 |
| Starch Gel | 19.2 | 6.2 |
| 3% Starch | 25.9 | 10.7 |
| Frozen Dessert Mix | 27.6 | 10.5 |

### Example 9

### Sensory analysis of Vanilla Frozen Desserts containing W/O/W Protein Microcapsules

The vanilla frozen desserts containing the w/o/w protein microcapsules were evaluated by sensory analysis. The sensory data revealed that the w/o/w protein microcapsules significantly improve the flavor release perception (See Table 3).

**TABLE 3**

| SENSORY DATA OF PROTEIN MICROCAPSULES IN VANILLA FROZEN DESSERT | | | | |
|---|---|---|---|---|
| | MICRO-CAPSULE A MEAN | MICRO-CAPSULE B MEAN | CONTROL | RANKINGS |
| OVERALL APPEARANCE | 7.00 | 7.08 | 6.78 | NSD |
| OVERALL FLAVOR | 6.14 | 6.78 | 5.31 | A,B,>C |
| OVERALL TEXTURE | 6.00 | 6.94 | 5.97 | B>A,C |
| OVERALL OPINION | 6.03 | 6.67 | 5.31 | A,B,>C |
| A=FILLED PROTEIN MICROCAPSULES A with starch gel B=FILLED PROTEIN MICROCAPSULES B with starch C=CONTROL (NO PROTEIN MICROCAPSULE) NSD = No Significant Difference. Reported differences are significant at the 99% level of confidence as determined by the standard AOV procedure followed by Duncan's MRT. | | | | |

As shown by the results in Table 3, the sensory data for the microcapsule-based flavor system compared favorably with a frozen dessert control and with an existing frozen dessert. In addition, the taste tests showed that the frozen dessert with microcapsule A and the frozen desserts with microcapsule B were preferred over a frozen dessert control and an existing low fat frozen dessert on the following measures: overall liking, overall flavor, overall texture and overall opinion.

### Example 10

### Evaluation of W/O/W Protein Microcapsules in Mayonnaise

Protein (egg white) microcapsules were prepared using a fat flavor as follows: First, the w/o emulsion was prepared by emulsifying an oil phase containing 4.0 g. soybean oil and 1.0 g. sugar ester S70 with 3.5 g. flavor (oil soluble flavor) and with 4 g. water and 4.5 g. other spices at 10,000 rpm (dispersion time = 1 min, 10 seconds). The resulting w/o emulsion was dispersed in 15 g. of 2.5% egg white solution. Microcapsules were prepared by sonicating the w/o emulsion for 30 seconds to produce w/o/w microcapsules. Microcapsules with (filled) and without (empty) flavor were prepared. 4.74% of the microcapsules was incorporated into the fat-free mayonnaise base. Comparison was made between the mayonnaise containing unfilled microcapsules, filled microcapsules, and the control which contained all the ingredients of the filled microcapsules, except that the flavors were not encapsulated. The microcapsules helped to preserve the flavor for a longer time and helped to release the flavor upon chewing the product.

### Example 11

### Delivery of Flavor in Fat-Free Cheese Singles Using Protein Microcapsules

Protein (egg white) microcapsules were prepared using a fat flavor as follows: 7 g. of 10% cheese flavor was first emulsified with 7 g. of egg white (3-5%) and the resulting o/w emulsion was sonicated (20-30 seconds) to obtain flavor filled egg white microcapsules. 7 g. Neobee oil was emulsified with 7 g. egg white (3-5%) and the resulting o/w emulsion was sonicated (20-30 seconds) to obtain flavor empty egg white microcapsules. Protein microcapsules with and without cheese flavor were incorporated into the fat-free cheese singles base. 50 g. of the fat-free cheese singles base was placed in a weighing dish and to that was added 0.37 g. of cheese flavor. An appropriate amount of the singles flavor was added in the form of protein microcapsules or otherwise. This mixture was set in a microwave and subjected to 80% power for 15 seconds, stirred and then microwaved again for 10 seconds. The mixture was then placed between two aluminum sheets and rolled in the form of cheese singles. The samples were evaluated by an informal sensory, panel. In the control sample, cheese flavor (0.023% or 0.028%) was added directly to the empty microcapsules.

Microcapsules were also made using whey protein concentrates (85% proteins) as a protein. When whey protein concentrate was used, good microspheres were formed, but a bitter flavor was imparted to the cheese singles. Microcapsules made using egg white had less of the chemical-like, off flavor than did the microcapsules made sins whey protein. In terms of flavor release, it was found that the control had immediate flavor release, whereas flavor was prolonged in the samples containing encapsulated flavors. However, the flavor intensity was reduced. This problem was addressed by incorporating 70% of the flavor in the microcapsules and adding 30% of the flavor directly to the product. In conclusion, the flavor of the cheese singles was improved by incorporating 70-100% of the flavor in microcapsules and adding 0-30% of the flavor directly to the mixture, as compared to the flavor obtained by using no encapsulated flavor (cheese singles made in the absence of flavor-filled microcapsules).

The above examples illustrate various features of the invention, but are not intended to limit the scope of the invention as set forth in the appended claims.

## Claims

1. A method of preparing a microcapsule flavor delivery system, comprising:
a. providing a mixture of (i) a flavoring material selected from an oil soluble flavor dissolved in an oil, a water soluble flavor in the internal aqueous phase of a w/o emulsion and a combination of oil soluble and water-soluble flavors in the form of a w/o emulsion and (ii) a protein solution;
b. subjecting said mixture to low shear mixing to provide an o/w pre-emulsion or a w/o/w multiple emulsion; and
c. subjecting said pre-emulsion or multiple emulsion to high shear mixing or sonication to provide an o/w emulsion having a coating of protein around the oil droplets or a w/o/w emulsion havinq a coating of protein around the w/o droplets.

2. A method according to claim 1, wherein said flavoring material is present in said pre-emulsion or said multiple emulsion at a level of from about 0.1% to about 50%.

3. A method of preparing a microcapsule flavor delivery system, comprising:
a. preparing a solution of protein in water;
b. preparing an o/w emulsion by dispersing an edible oil phase in an aqueous phase comprising said protein solution;
c. agitating said o/w emulsion to form a microcapsule of oil surrounded by protein, with said microcapsule dispersed in said aqueous phase.

4. A method of preparing a microcapsule flavor delivery system, comprising:
a. preparing a solution of protein in a first aqueous phase;
b. preparing a w/o emulsion by dispersing a second aqueous phase into an oil phase;
c. adding said w/o emulsion to said protein solution;
d. homogenizing said w/o emulsion and said protein solution to form a w/o/w emulsion;
e. agitating said w/o/w emulsion to form a microcapsule of a w/o emulsion surrounded by protein, with said microcapsule dispersed in said first aqueous phase.

5. A method according to claim 3 or claim 4, wherein said agitation is performed by sonication.

6. A method accordinq to claim 3 or claim 4, wherein said agitation is performed by microfluidization.

7. A method according to claim 6, wherein said microfluidization is performed under conditions of high pressure and cavitation.

8. A method according to claim 7, wherein said high pressure is at least about 10,000 psi (68.95 MPa).

9. A method according to any one of claims 1 to 8, wherein said oil is selected from flavor oils, fish oil, oil-based flavor, butterfat, vegetable oil, and Neobee oil.

10. A method according to any one of claims 1 to 9, wherein said protein is selected from an albumen, BSA, lactalbumin, ovalbumin, and egg white.

11. A method according to any one of claims 1 to 10, wherein said microcapsules have a particle size of from about 1 micron to about 100 microns.

12. A method according to any one of claims 1 to 11, wherein said protein solution has protein present at a level of from about 0.2% to about 11.5%.

13. A method according to any one of claims 1 to 12, wherein said oil is present in said microcapsules at a level of from about 20% to about 70%.

14. A method of preparing a food product with a flavor delivery system, comprising preparing a microcapsule flavor delivery system by a method according to any one of claims 1 to 13 and incorporating said microcapsule into a food product.

15. A method according to claim 14, wherein said food product is a food product containing less than about 6% fat.
